# EUROPÄISCHE PATENTSCHRIFT

(11) **EP 1 384 536 B1**
(45) Veröffentlichungstag und Bekanntmachung des Hinweises auf die Patenterteilung: **22.10.2008**
(21) Anmeldenummer: 03015130.2
(22) Anmeldetag: 04.07.2003
(51) Int. Cl.: B21D 53/88, B21D 51/52

(54) **Crashbox für Kraftfahrzeuge**
Crashbox for motor vehicles
Cashbox pour véhicules automobiles

(30) Priorität: 27.07.2002 DE 10234253
(43) Veröffentlichungstag der Anmeldung: 28.01.2004
(73) Patentinhaber: Hydro Aluminium Deutschland GmbH, 51149 Köln (DE)
(72) Erfinder: Günther, Stefan, 53783 Eitorf (DE)
(74) Vertreter: Cohausz & Florack

(56) Entgegenhaltungen:
- EP-A- 0 734 908
- DE-A- 10 002 379
- DE-A- 19 751 513
- US-A- 6 059 331
- US-B1- 6 192 584
- US-B2- 6 402 209

## Beschreibung

Die vorliegende Erfindung betrifft ein Verfahren zur Herstellung einer Crashbox für Kraftfahrzeuge aus einem Blechhalbzeug sowie eine Crashbox für Kraftfahrzeuge mit einem Mehrfachkammerprofil.

Crashboxen werden bei Kraftfahrzeugen, insbesondere bei Personenkraftfahrzeugen, verwendet, um dass Chassis des Personenkraftwagens bei Unfällen mit geringen Geschwindigkeiten vor Beschädigungen zu schützen.

Die Crashbox befindet sich beim Personenkraftfahrzeug zwischen dem Stoßfänger und dem Chassis, so dass die bei einem Unfall auf die Stoßfänger wirkenden Kräfte über die Crashbox in das Chassis eingeleitet werden. Dabei dient die Crashbox dazu, die Kräfte weitgehend zu neutralisieren, d. h. die Aufprallenergie aufzunehmen, sodass es bei einem Unfall zu keiner Verformung des dahinterliegenden Chassis kommt. Bei der Aufnahme der Aufprallenergie verformt sich die Crashbox gezielt, sodass die Aufprallenergie in Verformungsenergie umgewandelt wird und das Chassis vor dem Einwirken zu großer Kräfte geschützt wird.

Bei einigen Kraftfahrzeugen lässt sich der gewünschte Kraftaufnahmeverlauf bzw. das gezielte Verformungsverhalten der Crashbox nur mit einem Mehrfachkammerprofil erreichen. Mehrfachkammerprofile weisen im Vergleich zu Einkammerprofilen ein höheres Kraftaufnahmevermögen bei gleichem Raumbedarf aus.

Bisher werden derartige Crashboxen beispielsweise aus Strangpressprofilen aus Aluminiumwerkstoffen oder aus Profilen bestehend aus Stahlwerkstoffen hergestellt, wobei ein Mehrkammerprofil durch Verschweißen, Durchsetzfügen, Schrauben von einkammerigen Strukturen erzeugt wird.

Nachteilig bei dem oben beschriebenen Herstellverfahren ist jedoch, dass die zur Erreichung eines gezielten Verformungsverhaltens notwendige Randkontur der Crashbox, die Ausbildung von Ausschnitten oder Laschen für Befestigungselemente oder das Einbringen von Anfaltsicken nur durch komplizierte und zeitaufwendige spanabhebende Bearbeitungsverfahren, beispielsweise Fräsen oder Bohren, hergestellt werden können. Um die geforderten Genauigkeiten mit diesen Verfahren zu erreichen, muss das Werkstück vor dem Durchführen der Verfahren aufwendig zentriert bzw. positioniert werden. Dies bedeutet einen sehr hohen Zeit- und Kostenaufwand in der Fertigung, welcher eine wirtschaftliche Fertigung bei hohen Stückzahlanforderungen nicht mehr zulässt.

Aus der auf die Anmelderin zurückgehende deutsche Offenlegungsschrift DE 197 51 513 A1 ist eine Crashbox bekannt, die aus einem rohrförmigen hohlen Grundkörper hergestellt wird. Die aus der oben genannten Patentanmeldung bekannten Crashboxen weisen allerdings kein Mehrfachkammerprofil auf. Darüber hinaus müsste auch bei einer aus der oben genannten Druckschrift bekannten Crashbox Elemente zur Steuerung des Verformungsverhaltens der Crashbox mittels aufwendiger spanabhebender Verfahren in den rohrförmigen Grundkörper eingebracht werden.

Weiterhin ist auch die Herstellung von Crashboxen aus tiefgezogenen Blechen oder Blechhalbzeugen bekannt. Auch bei diesem Herstellverfahren können Löcher, Ausschnitte oder Versteifungselemente erst nach dem Tiefziehen eingebracht werden, um ein Verformen oder Aufreißen derartiger Strukturen beim Tiefziehen zu verhindern. Daher müssen auch bei den aus tiefgezogenen Blechen hergestellten Crashboxen spanabhebende Verfahren nach dem Tiefziehen eingesetzt werden.

Ausgehend von dem zuvor beschriebenen Stand der Technik liegt der Erfindung die Aufgabe zugrunde, ein einfacheres und kostengünstigeres Verfahren zur Herstellung einer Crashbox für Kraftfahrzeuge sowie eine entsprechende Crashbox zur Verfügung zu stellen.

Gemäß einer ersten Lehre der vorliegenden Erfindung wird die oben hergeleitete und aufgezeigte Aufgabe verfahrensmäßig dadurch gelöst, dass das Blechhalbzeug durch Biegen und/oder Falten in ein Mehrfachkammerprofil, insbesondere ein Doppelkammerprofil, umgeformt wird.

Wie bereits erläutert weisen Crashboxen mit Mehrfachkammerprofilen verbesserte Kraftaufnahmeeigenschaften auf. Durch das Biegen und/oder Falten steht ein besonders einfaches Verfahren zur Verfügung, mit Hilfe dessen Crashboxen mit einer verbesserten Festigkeit hergestellt werden können. Dabei wird vorzugsweise ein Doppelkammerprofil in das Blechhalbzeug eingebracht, welches durch eine variable Anzahl von Biegekanten- oder Faltschritten ein skalierbares Kraftaufnahmevermögen aufweist.

Die Festigkeit der Crashbox kann, gemäß einer weitergebildeten Ausführungsform des erfindungsgemäßen Verfahrens, dadurch weiter gesteigert werden, indem offene Seiten und/oder auf Stoß liegende Segmente des Mehrfachkammerprofils durch Fügeverfahren, insbesondere durch Schweißen, Nieten, Durchsetzfügen (Clinchen) und/oder Kleben, geschlossen werden.

Vorzugsweise wird das Blechhalbzeug vor dem Umformen zum Mehrfachkammerprofil mindestes einem weiteren vorgelagerten Umformprozess, insbesondere einem Stanzen, Falten und/oder Tiefprägen, unterzogen, sodass gemäß einer nächsten weitergebildeten Ausführungsform des erfindungsgemäßen Verfahrens, zeitaufwendige spanabhebende Bearbeitungsschritte nach dem Umformen entfallen können. Insbesondere durch den Wegfall der Rüstzeiten für das Spannen von Werkstücken, beispielsweise für Fräsoperationen, können hohe Stückzahlanforderungen aufgrund der erhöhten Durchlaufgeschwindigkeit in der Fertigung erfüllt werden.

Auf einfache und rationelle Weise kann die komplexe geometrische Randkontur einer Crashbox realisiert werden, indem, gemäß einer nächsten weitergebildeten Ausführungsform des erfindungsgemäßen Verfahrens, in einem vorgelagerten Umformprozess die geometrische Randkontur der Crashbox in das Blechhalbzeug eingebracht, insbesondere gestanzt, wird. Hierdurch können insbesondere auch Laschen zum Verbinden des Blechhalbzeuges beispielsweise mit einer Befestigungsplatte erzeugt werden.

Gemäß einer nächsten vorteilhaften Ausführungsform des erfindungsgemäßen Verfahrens, werden in einem vorgelagerten Umformprozess das gewünschte Verformungsverhalten der Crashbox gewährleistende Verformungselemente in das Blechhalbzeug eingebracht, sodass das Verformungsverhalten der Crashbox bereits vor dem Umformen durch das Blechhalbzeug vorbestimmt werden kann.

Werden in einem vorgelagerten Umformprozess Löcher, Ausschnitte, Versteifungselemente, Laschen und/oder Anfaltsicken in das Blechhalbzeug eingebracht, so können dazu einfache Umformverfahren wie beispielsweise Stanzen, Falten oder Tiefprägen verwendet werden, welche in bezug auf die Verarbeitungszeit besonders vorteilhaft gegenüber spanabhebenden Bearbeitungsschritten sind.

Gemäß einer nächsten weitergebildeten Ausführungsform des erfindungsgemäßen Verfahrens werden die vorgelagerten Umformprozesse zumindest teilweise in einem Folgeverbundoder Transferwerkzeug durchgeführt. Bei Folgeverbundwerkzeugen wird das Rohmaterial, ein Blechband, mit Hilfe eines Zangen- oder Walzenvorschubes dem Folgeverbundwerkzeug zugeführt und bei jedem Pressenhub schrittweise bis zum Endprodukt umgeformt. Dabei fallen bei jedem Pressenhub ein oder mehrere Halbfertigteile an, je nachdem, ob das Folgeverbundwerkzeug ein- oder mehrreihig ausgeführt ist. Gleiches gilt auch für Transferwerkzeuge, wobei jedoch in der ersten Stufe der Bearbeitung ein Blechausschnitt vollständig vom Band getrennt wird und separat im Werkzeug weitertransportiert wird. Auch bei einem Transferwerkzeug fallen je nach Ausführungstyp ein oder mehrere Halbfertigteile mit jedem Pressenhub an. Durch die Verwendung derartiger Werkzeuge können sehr hohe Stückzahlen innerhalb einer kurzen Fertigungszeit hergestellt werden.

Gemäß einer zweiten Lehre der vorliegenden Erfindung wird die aufgezeigte Aufgabe durch eine Crashbox für ein Kraftfahrzeug mit einem Mehrfachkammerprofil dadurch gelöst, dass die Crashbox mindestens ein ein Mehrfachkammerprofil aufweisendes, durch Biegen und/oder Falten umgeformtes Blechhalbzeug aufweist. Eine derartige Crashbox weist nicht nur die gewünschte Festigkeit auf, sondern kann auch besonders einfach und rationell hergestellt werden.

Ein optimiertes Verhältnis zwischen Arbeitsaufwand und erreichbarer Festigkeit zeichnet eine weitergebildete Ausführungsform der erfindungsgemäßen Crashbox aus, indem die Crashbox ein Doppelkammerprofil aufweist.

Weist die Crashbox, gemäß einer nächsten vorteilhaften Ausführungsform, ein durch Schweißen, Kleben, Durchsetzfügen und/oder Nieten geschlossenes Mehrfachkammerprofil auf, so kann die Festigkeit der Crashbox weiter gesteigert werden.

Das Verformungsverhalten der Crashbox kann gezielt beeinflusst werden, indem, gemäß einer nächsten weitergebildeten Ausführungsform der erfindungsgemäßen Crashbox, die Crashbox Verformungselemente aufweist. Insbesondere kann durch diese Maßnahmen die von der Crashbox auf das Chassis eines Fahrzeuges einwirkende maximale Kraft begrenzt bzw. getilgt und in eine geordnete Verformung der Crashbox gerichtet werden.

Vorzugsweise weist die Crashbox, gemäß einer nächsten weitergebildeten Ausführungsform, Löcher, Ausschnitte, Versteifungselemente, Laschen oder Anfaltsicken auf, sodass auf einfache Weise ein an das Chassis angepasstes Verformungsverhalten der Crashbox gewährleistet werden kann.

Eine nächste weitergebildete Ausführungsform der erfindungsgemäßen Crashbox gewährleistet ein im wesentlichen nach außen gerichtetes Verformungsverhalten bei der Aufnahme von Aufprallenergie, sodass ein maximaler Verformungsgrad erzielt werden kann, dadurch, dass die Verformungselemente zumindest im wesentlichen auf den Außenflächen der Crashbox angeordnet sind.

Es existiert nun eine Vielzahl von Möglichkeiten, dass erfindungsgemäße Verfahren zur Herstellung einer Crashbox sowie die erfindungsgemäße Crashbox auszugestalten und weiterzubilden. Hierzu wird beispielsweise verwiesen einerseits auf die den Patentansprüchen 1 und 8 nachgeordneten Patentansprüche, andererseits auf die Beschreibung eines Ausführungsbeispiels eines erfindungsgemäßen Verfahrens zur Herstellung einer Crashbox in Verbindung mit der Zeichnung. In der Zeichnung zeigt:
- Fig. 1: in einer Aufsicht ein erstes Ausführungsbeispiel eines ebenen Blechhalbzeuges zur Herstellung einer Crashbox,
- Fig. 1a: eine perspektivische Ansicht eines zweiten Ausführungsbeispiels einer Crashbox mit Laschen zum Verbinden mit einer Befestigungsplatte und
- Fig. 2: eine perspektivische Ansicht des mit einer Befestigungsplatte verbundenen ersten Ausführungsbeispiels einer Crashbox.

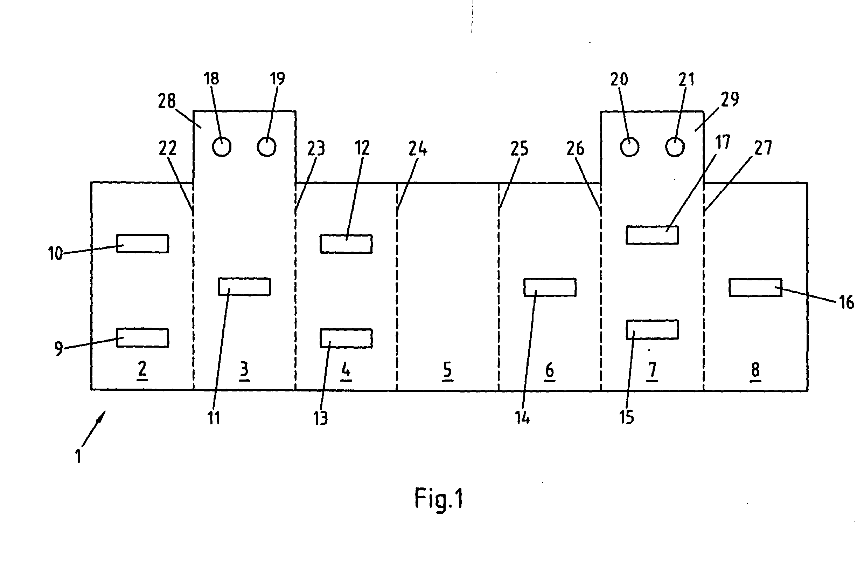

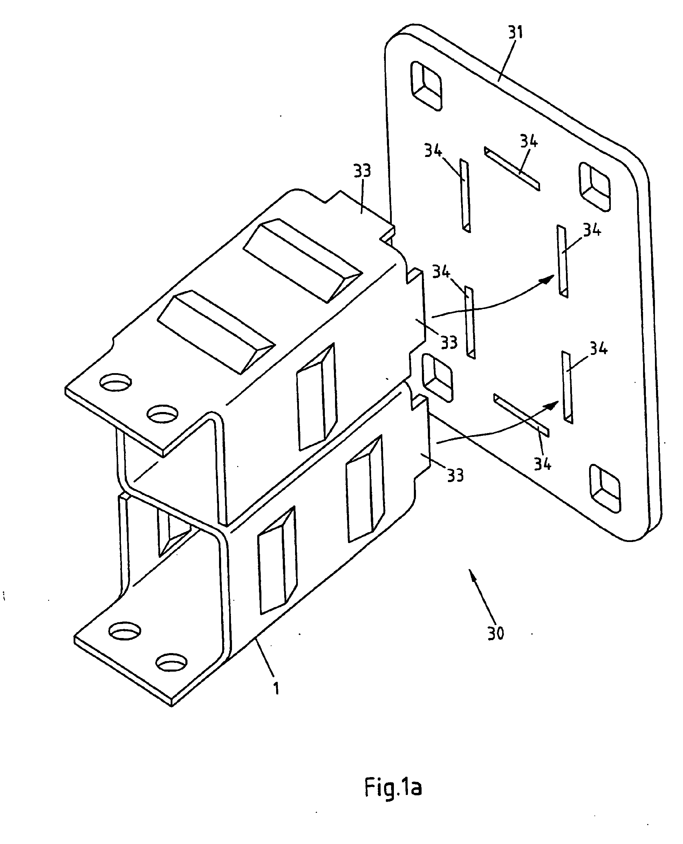

Die Fig. 1 zeigt ein Ausführungsbeispiel eines Blechhalbzeuges 1, dass in insgesamt sieben Biegesegmente 2, 3, 4, 5, 6, 7 und 8 aufgeteilt ist. Darüber hinaus weist das Blechhalbzeug 1 insgesamt neun Anfaltsicken 9, 10, 11, 12, 13, 14, 15, 16 und 17 sowie vier Löcher 18, 19, 20 und 21 auf, welche auf den ausgestanzten Laschen 28 und 29 angeordnet sind. Die Anfaltsicken 9, 10, 11, 12, 13, 14, 15, 16 und 17 dienen dazu, der Crashbox das gewünschte Verformungsverhalten im Falle eines Unfalles zu geben. Die Löcher 18, 19, 20 und 21 hingegen gewährleisten, dass die fertiggestellte Crashbox mit dem Chassis eines Fahrzeuges einfach verbunden werden kann.

Vorteilhaft ist nun, dass die eben beschriebenen Anfaltsicken 9, 10, 11, 12, 13, 14, 15, 16 und 17, die Löcher 18, 19, 20, 21 sowie die Laschen 28 und 29 vor dem Umformen des Blechhalbzeuges 1 zu einem Mehrfachkammerprofil in einem vorgelagerten Umformprozess in das Blechhalbzeug 1 eingebracht werden. Aufgrund des ebenen Profils des Blechhalbzeuges 1 können dabei zeitsparende Bearbeitungsverfahren, beispielsweise Stanzen, Tiefprägen, Falten etc., verwendet werden. Besonders vorteilhaft ist dabei der Einsatz von Folgeverbund- oder Transferwerkzeugen, welche die Produktion hoher Stückzahlen gewährleisten können. Hohe Stückzahlen ermöglichen insbesondere mehrreihige Folgeverbund- oder Transferwerkzeuge, mit Hilfe derer pro Pressenhub mehrere Fertigteile hergestellt werden können.

Sind die notwendigen vorgelagerten Umformprozesse durchgeführt, kann mit dem Biegen oder Falten zu einem Mehrkammerprofil begonnen werden. Das Blechhalbzeug 1 ist dazu in mehrere Biegesegmente 2, 3, 4, 5, 6, 7 und 8 eingeteilt. Bei dem erfindungsgemäßen Verfahren werden nun die Biegesegmente 2, 3, 4 und 5 des Blechhalbzeuges 1 an den Biegekanten 22, 23 und 24 um jeweils 90° mit gleichem Drehsinn gebogen, sodass die Biegesegmente 2, 3, 4 und 5 ein erstes Vierkantprofil bilden.

In einem nächsten Schritt werden die Biegesegmente 6, 7 und 8 an den Biegekanten 25, 26 und 27 in jeweils gleicher Richtung um 90° gebogen jedoch mit umgekehrtem Drehsinn zum vorherigen Biegen, so dass die Biegesegmente 5, 6, 7 und 8 ein zum ersten Vierkantprofil parallel verlaufendes zweites Vierkantprofil bilden. Beide Vierkantprofile haben als Mittelsteg ein gemeinsames Biegesegment 5. Im Ergebnis ergibt sich das bevorzugte Doppelkammerprofil der Crashbox (30), das auch als S-Schlagprofil bezeichnet wird.

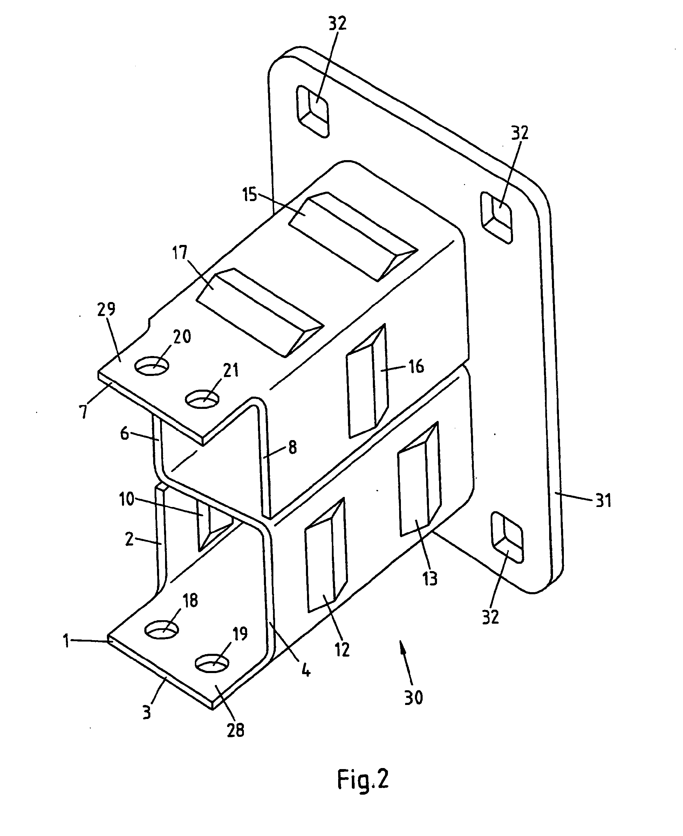

Die Fig. 2 zeigt nun in einer perspektivischen Ansicht ein Ausführungsbeispiel einer Crashbox 30, die mit dem erfindungsgemäßen Verfahren aus dem Blechhalbzeug 1 hergestellt wurde. Wie die Fig. 2 zeigt, stehen sich die aus dem Blechhalbzeug 1 ausgestanzten, die Löcher 18, 19, 20 und 21 aufweisenden Laschen 28 und 29 im fertig umgeformten Zustand parallel gegenüber, sodass die fertige Crashbox 30 mit dem Chassis eines Kraftfahrzeuges über die Löcher 18, 19, 20 und 21 fest verbunden werden kann.

Wie weiter aus der Fig. 2 zu erkennen ist, ist das zu einem Doppelkammerprofil umgeformte Blechhalbzeug 1 mit einer Befestigungsplatte 31 verschweißt, welche insgesamt vier Löcher 32 zur Befestigung eines Stoßfängers aufweist, wobei nur drei der Löcher 32 in Fig. 2 dargestellt sind. Allerdings ist es auch möglich, die Befestigungsplatte 31 durch andere Fügeverfahren, beispielweise Nieten und/oder Kleben oder Durchsetzfügen (Clinchen), mit dem Blechhalbzeug 1 zu verbinden.

Eine weitere Möglichkeit, das umgeformte Blechhalbzeug 1 mit der Befestigungsplatte 31 zu verbinden, zeigt Fig. 1a in einem weiteren Ausführungsbeispiel der erfindungsgemäßen Crashbox 30. Die perspektivische Ansicht zeigt die Crashbox 30 vor dem Zusammenfügen mit der Befestigungsplatte 31, welche Aufnahmeschlitze 34 zur Aufnahme der im vorgelagerten Umformprozess über den Beschnitt der Randkontur des Blechhalbzeuges 1 eingebrachten Laschen 33 aufweist. Durch die Laschen 33 wird einerseits gewährleistet, dass das Blechhalbzeug 1 beim Verbinden mit der Befestigungsplatte 31 exakt positioniert werden kann. Andererseits kann beispielsweise durch auf Presspassung ausgelegten Aufnahmeschlitzen 34 bereits durch Einstecken des Blechhalbzeuges 1 eine Verbindung zur Befestigungsplatte 31 hergestellt werden. Eine besonders feste Verbindung zwischen dem Blechhalbzeug 1 und der Befestigungsplatte 31 kann durch die zusätzliche Verwendung der oben beschriebenen Fügeverfahren erreicht werden.

Wie Fig. 2 weiter zeigt, kann zur Erhöhung der Festigkeit nun das Biegesegment 8 stirnseitig mit dem Biegesegment 4 sowie das Biegesegment 2 stirnseitig mit dem Biegesegment 6 beispielsweise über eine parallel zur Längsachse der Crashbox 30 verlaufende Schweißnaht verbunden werden, so dass ein geschlossenes Doppelkammerprofil entsteht. Auch zur Verbindung der offenen Seiten des gebogenen Mehrfachkammerprofils können andere Fügeverfahren, beispielsweise Nieten und/oder Kleben oder Durchsetzfügen (Clinchen), verwendet werden.

Die für das gezielte Verformungsverhalten der Crashbox 30 eingebrachten Anfaltsicken 9, 10 ,11, 12, 13, 14, 15, 16 und 17 sind, wie Fig. 2 zeigt, nur auf den Außenflächen des durch das umgeformte Blechhalbzeug 1 gebildeten Doppelkammerprofils angeordnet. Hierdurch wird gewährleistet, dass bei der Aufnahme von Aufprallenergie durch die Crashbox 30 eine Verformung der Crashbox 30 im wesentlichen nach außen gerichtet sein wird. Damit kann sich die Crashbox 30 im wesentlichen frei nach Außen verformen, sodass ein maximaler Verformungsgrad erreicht werden kann und somit die von der Crashbox 30 maximal aufnehmbare Verformungsenergie weiter vergrößert werden kann.

## Patentansprüche

1. Verfahren zur Herstellung einer Crashbox für Kraftfahrzeuge aus einem Blechhalbzeug
**dadurch gekennzeichnet, dass** das Blechhalbzeug durch Biegen und/oder Falten in ein Mehrfachkammerprofil, insbesondere ein Doppelkammerprofil, umgeformt wird.

2. Verfahren nach Anspruch 1,
**dadurch gekennzeichnet, dass** offene Seiten und/oder auf Stoß liegende Segmente des Mehrfachkammerprofils durch Fügeverfahren, insbesondere durch Schweißen, Nieten, Durchsetzfügen und/oder Kleben, geschlossen werden.

3. Verfahren nach Anspruch 1 oder 2,
**dadurch gekennzeichnet, dass** das Blechhalbzeug vor dem Umformen zum Mehrfachkammerprofil mindestens einem weiteren vorgelagerten Umformprozess, insbesondere einem Stanzen, Falten und/oder Tiefprägen, unterzogen wird.

4. Verfahren nach Anspruch 3.
**dadurch gekennzeichnet, dass** in einem vorgelagerten Umformprozess die geometrische Randkontur der Crashbox in das Blechhalbzeug eingebracht, insbesondere gestanzt, wird.

5. Verfahren nach Anspruch 3 oder 4,
**dadurch gekennzeichnet, dass** in einem vorgelagerten Umformprozess das gewünschte Verformungsverhalten der Crashbox gewährleistende Verformungselemente in das Blechhalbzeug eingebracht werden.

6. Verfahren nach einem der Ansprüche 3 bis 5,
**dadurch gekennzeichnet, dass** in einem vorgelagerten Umformprozess Löcher, Ausschnitte, Versteifungselemente, Laschen und/oder Anfaltsicken in das Blechhalbzeug eingebracht werden.

7. Verfahren nach einem der Ansprüche 4 bis 6,
**dadurch gekennzeichnet, dass** die vorgelagerten Umformprozesse zumindest teilweise in einem Folgeverbund- oder Transferwerkzeug durchgeführt werden.

8. Crashbox für ein Kraftfahrzeug mit einem Mehrfachkammerprofil, insbesondere hergestellt mit Hilfe eines Verfahrens nach einem der Ansprüche 1 bis 7,
**dadurch gekennzeichnet, dass** die Crashbox mindestens ein ein Mehrfachkammerprofil aufweisendes, durch Biegen und/oder Falten umgeformtes Blechhalbzeug (1) aufweist.

9. Crashbox für ein Kraftfahrzeug nach Anspruch 8
**dadurch gekennzeichnet, dass** die Crashbox (30) ein Doppelkammerprofil aufweist.

10. Crashbox für ein Kraftfahrzeug nach Anspruch 8 oder 9
**dadurch gekennzeichnet, dass** die Crashbox (30) ein durch Schweißen, Kleben, Durchsetzfügen und/oder Nieten geschlossenes Mehrfachkammerprofil aufweist.

11. Crashbox für ein Kraftfahrzeug nach einem der Ansprüche 8 bis 10
**dadurch gekennzeichnet, dass** die Crashbox (30) Verformungselemente (9,10,11,12,13,14,15,17) aufweist.

12. Crashbox für ein Kraftfahrzeug nach einem der Ansprüche 8 bis 11
**dadurch gekennzeichnet, dass** die Crashbox (30) Löcher (18,19,20,21,), Ausschnitte, Versteifungselemente, Laschen (28,29) oder Anfaltsicken (9,10,11,12,13,14,15,16,17) aufweist.

13. Crashbox für ein Kraftfahrzeug nach einem der Ansprüche 8 bis 12
**dadurch gekennzeichnet, dass** die Verformungselemente (9,10,11,12,13,14,15,17) zumindest im wesentlichen auf den Außenflächen der Crashbox (30) angeordnet sind.

## Claims

1. Method for the manufacture of a crash box for motor vehicles made of a sheet metal semi-finished item,
**characterised in that** the sheet metal semi-finished item is formed by bending and/or folding into a multi-chamber profile, in particular a double-chamber profile.

2. Method according to Claim 1,
**characterised in that** open sides and/or abutting segments of the multi-chamber profile are closed by joining methods, in particular by welding, riveting, clinching and/or adhesive bonding.

3. Method according to Claim 1 or 2,
**characterised in that** the sheet metal semi-finished item, before forming into a multi-chamber profile, is subjected to at least one further upstream forming process, in particular punching, folding, and/or deep embossing.

4. Method according to Claim 3,
**characterised in that,** in an upstream forming process, the geometric edge contour of the crash box is introduced, in particular punched, into the sheet metal semi-finished item.

5. Method according to Claim 3 or 4,
**characterised in that,** in an upstream forming process, the forming elements, which guarantee the desired forming behaviour of the crash box, are introduced into the sheet metal semi-finished item.

6. Method according to any one of Claims 3 to 5,
**characterised in that,** in an upstream forming process, holes, cut-outs, bracing elements, lugs and/or folding beading are introduced into the sheet metal semi-finished item.

7. Method according to any one of Claims 4 to 6,
**characterised in that** the upstream forming processes are carried out at least in part in a follow-on composite tool or transfer tool.

8. Crash box for a motor vehicle with a multi-chamber profile, manufactured in particular with the aid of a method according to any one of Claims 1 to 7,
**characterised in that** the crash box has at least one sheet metal semi-finished item (1) having a multi-chamber profile, formed by bending and/or folding.

9. Crash box for a motor vehicle according to Claim 8,
**characterised in that** the crash box (30) has a double chamber profile.

10. Crash box for a motor vehicle according to Claim 8 or 9,
**characterised in that** the crash box (30) has a multi-chamber profile closed by welding, adhesive bonding, clinching and/or riveting.

11. Crash box for a motor vehicle according to any one of Claims 8 to 10, **characterised in that** the crash box (30) has forming elements (9, 10, 11, 12, 13, 14, 15, 17).

12. Crash box for a motor vehicle according to any one of Claims 8 to 11, **characterised in that** the crash box (30) has holes (18, 19, 20, 21), cut-outs, bracing elements, lugs (28, 29), or folding beading (9, 10, 11, 12, 13, 14, 15, 16, 17).

13. Crash box for a motor vehicle according to any one of Claims 8 to 12, **characterised in that** the forming elements (9, 10, 11, 12, 13, 14, 15, 17) are arranged at least essentially on the outer surfaces of the crash box (30).

## Revendications

1. Procédé de fabrication d'un absorbeur de chocs pour véhicules automobiles à partir d'un produit semi-fini de tôle, **caractérisé en ce que** le produit semi-fini de tôle est mis en forme par cintrage et/ou pliage pour obtenir un profilé à chambres multiples, en particulier un profilé à double chambre.

2. Procédé selon la revendication 1, **caractérisé en ce que** des côtés ouverts et/ou des segments situés au bord du profilé à chambres multiples sont fermés par un procédé d'assemblage, en particulier par soudage, rivetage, jonction forcée et/ou collage.

3. Procédé selon la revendication 1 ou 2, **caractérisé en ce que** le produit semi-fini de tôle est soumis, avant d'être mis en forme en profilé à chambres multiples, au moins à un autre procédé de mise en forme préalablement effectué, en particulier à un estampage, à un pliage et/ou à un cambrage.

4. Procédé selon la revendication 3, **caractérisé en ce que,** dans un procédé de mise en forme préalablement effectué, le contour géométrique de l'absorbeur de chocs est introduit dans le produit semi-fini de tôle, en particulier estampé.

5. Procédé selon la revendication 3 ou 4, **caractérisé en ce que,** dans un procédé de mise en forme préalablement effectué, des éléments de déformation garantissant le comportement à la déformation souhaité de l'absorbeur de chocs sont introduits dans le produit semi-fini de tôle.

6. Procédé selon l'une quelconque des revendications 3 à 5, **caractérisé en ce que,** dans un procédé de mise en forme préalablement effectué, des trous, des découpes, des éléments de renforcement, des attaches et/ou des moulures sont introduits dans le produit semi-fini de tôle.

7. Procédé selon l'une quelconque des revendications 4 à 6, **caractérisé en ce que** les procédés de mise en forme préalablement effectués sont réalisés au moins en partie dans un outil à suivre composite ou dans un outil de transfert.

8. Absorbeur de chocs pour véhicule automobile comprenant un profilé à chambres multiples, fabriqué en particulier à l'aide d'un procédé selon l'une quelconque des revendications 1 à 7, **caractérisé en ce que** l'absorbeur de chocs présente au moins un produit semi-fini de tôle (1) ayant un profilé à chambres multiples, mis en forme par cintrage et/ou pliage.

9. Absorbeur de chocs pour véhicule automobile selon la revendication 8, **caractérisé en ce que** l'absorbeur de chocs (30) présente un profilé à chambre double.

10. Absorbeur de chocs pour véhicule automobile selon la revendication 8 ou 9, **caractérisé en ce que** l'absorbeur de chocs (30) présente un profilé à chambres multiples fermé par soudage, collage, jonction forcée et/ou rivetage.

11. Absorbeur de chocs pour véhicule automobile selon l'une quelconque des revendications 8 à 10, **caractérisé en ce que** l'absorbeur de chocs (30) présente des éléments de déformation (9, 10, 11, 12, 13, 14, 15, 17).

12. Absorbeur de chocs pour véhicule automobile selon l'une quelconque des revendications 8 à 11, **caractérisé en ce que** l'absorbeur de chocs (30) présente des trous (18, 19, 20, 21), des découpes, des éléments de renforcement, des pattes (28, 29) ou des moulures (9, 10, 11, 12, 13, 14, 15, 16, 17).

13. Absorbeur de chocs pour véhicule automobile selon l'une quelconque des revendications 8 à 12, **caractérisé en ce que** les éléments de déformation (9, 10, 11, 12, 13, 14, 15, 17) sont agencés au moins essentiellement sur les surfaces externes de l'absorbeur de chocs (30).
